# EUROPEAN PATENT APPLICATION

(11) **EP 2 950 081 A1**
(43) Date of publication of application: **02.12.2015**
(21) Application number: 14170131.8
(22) Date of filing: 27.05.2014
(51) Int. Cl.: G01N 21/03, G01N 21/55

(54) **Foam analysis apparatus**

(71) Applicant: Krüss GmbH, 22453 Hamburg (DE)
(72) Inventor: Weser, Florian, D-22453 Hamburg (DE)
(74) Representative: UEXKÜLL & STOLBERG

(57) **Abstract**

Foam analysis apparatus including a pressure chamber (2) comprising a housing (5) having an interior cavity (6) for holding a foam sample under pressure, a wall portion with a through-hole (10), and a transparent element (8) closing the through-hole (10) such that a cavity limiting surface portion (15) of the surface of the transparent element (8) forms a portion of a surface of an interior wall limiting the cavity (6). The transparent element (8) comprises a base portion (11) and two spaced projecting portions (12a, 12b). The base portion (11) defines the cavity limiting surface portion (15). The projecting portions (12a, 12b) extend from the base portion (11) opposite the cavity limiting surface portion (15) and are spaced from each other. Each projecting portion (12a, 12b) has a first face (21a, 21b). The apparatus further comprises at least one illuminating device (4) and at least one image recording device (3).

## Description

The present application relates to a foam analysis apparatus comprising a housing, inside of which a cavity for holding a foam sample is located, and which comprises a transparent element having a cavity limiting surface portion forming a part of an interior surface of the housing limiting the cavity, and further comprising an illuminating device, by means of which a foam sample on the cavity limiting surface portion and disposed inside the cavity can be illuminated, and an image recording device, by means of which light emitted by the illuminating device and reflected at the cavity limiting surface portion can be recorded.

The analysis of foam is of importance in many fields of technology and relates to different parameters and foam characteristics, such as foam levels or heights, foam volumes, bubble size distribution, foam stability and foam decay. Using an apparatus of the above construction it is possible to observe the foam structure on a transparent wall inside the cavity and to derive the desired parameters and characteristics from the recorded light or images.

Optical foam analyzing methods allowing for the analysis of the foam structure typically rely on illuminating a portion of a foam sample disposed inside a chamber through a window, recording an image of the illuminated portion of the foam sample, and evaluating the recorded image. For a precise foam structure determination it is important to avoid, in the recorded images, a superposition of multiple layers of bubbles arranged one behind the other adjacent to the window, because it may be difficult to easily and reliably distinguish between the different layers, so that the result may be falsified. Even in case only the layer of bubbles immediately adjacent the window is put into focus, a second layer or even more layers appear as blurred structures in the images, which complicates the identification of the layer of interest and tends to introduce errors into the analysis process.

It is therefore desired that the imaged foam layer adjacent the window is as thin as possible. For this purpose, an apparatus of the construction mentioned initially is known in which the transparent element is provided in the form of a right triangular prism. The prism is arranged such that one of the three faces of the prism (i.e., in the case of prisms having two opposite and parallel triangular base surfaces, one of the three faces extending between and joining the base surfaces) faces the cavity and provides the cavity limiting surface portion, light emitted by the illuminating device enters another of the three faces, and the reflected light exits the prism through the last one of the three faces. In the prior art apparatus the use of the prism allows for a straight beam path of light travelling between the illuminating device and the cavity limiting surface portion and a straight beam path of reflected light travelling between the cavity limiting surface portion and the image recording device, which beam paths are perpendicular to the respective prism faces. More particularly, the prism can be arranged such that total reflection of the light occurs at the cavity limiting surface portion at locations at which no bubble lamellae adjoin the cavity limiting surface portion and partial transmission of light occurs at the locations of the bubble lamellae. This is possible due to the difference in the refractive indices of the bubble lamellae and of air or a gas atmosphere inside the cavity. Thus, part or all of the cavity limiting surface portion can be observed, and the foam structure immediately adjacent the window is precisely imaged.

In some fields of technology it is desirable to analyze foam while under pressure and in particular under high pressures of e.g. more than 10 bar, more than 30 bar or even more than 300 bar, and up to e.g. 700 bar. Examples are the oil industry and food processing technology. This would require use of pressure chambers, in which the thickness of transparent elements forming a part of the housing of the pressure chamber must be high and the dimensions of cavity limiting surface portions of such transparent elements are very limited. Therefore, when attempting to transfer the prior art arrangement utilizing a prism as the transparent element one would have to significantly increase the size of the prism in order to provide for sufficient material thickness over the entire cavity limiting surface portion and beyond. Such a prism would be excessively expensive and difficult to manufacture, and it would be difficult to secure the prism to the remainder of the pressure chamber. Further, the dimensions of the cavity limiting surface portion provided by the prism would be severely limited for very high pressures, because with increasing pressure it becomes increasingly difficult or even impossible to provide appropriate support of the prism over the cavity limiting surface portion.

It is an object of the present invention to provide a foam analysis apparatus which enables simple and reliable analysis of foam samples under high pressures and is of simple construction, and which overcomes the above-mentioned disadvantages.

This object is achieved by a foam analysis apparatus according to claim 1. Advantageous embodiments of the apparatus are the subject-matter of the dependent claims.

According to the present invention, a foam analysis apparatus includes a pressure chamber which comprises a housing. The housing has or defines an interior cavity which is adapted for holding a foam sample under pressure with respect to the exterior of the housing, i.e. withstand positive pressure or overpressure existing inside the cavity as compared to the environmental pressure surrounding the housing. During analysis this interior cavity is closed completely, but can be opened by suitable means, such as a releasable or removable door, cover or wall portion, for introducing a foam sample into the cavity and for removing foam sample from the cavity.

The housing comprises a wall portion with a through-hole or opening extending between the cavity and the exterior of the housing and a transparent or light-transmitting element which closes the through-hole such that a cavity limiting surface portion of a surface of the transparent element forms a portion of a surface of an interior wall limiting the cavity. In other words, the cavity limiting surface portion is a part or portion of the surface of the transparent element facing the cavity and forming a boundary of the cavity. It will thus be understood that the interior wall limiting the cavity is provided completely or at least in part by the combination of the wall portion and the transparent element closing the through-hole, and that the surface of the interior wall limiting the cavity is constituted completely or at least in part by the combination of the cavity limiting surface portion of the transparent element and a surface of the wall portion adjacent to the through-hole. The transparent element is removably or fixedly secured to the wall portion and/or a remaining portion of the housing.

The transparent element comprises a base portion and two spaced projecting portions projecting from the base portion. The base portion is located between the cavity and the projecting portions, and a portion of its surface facing the cavity constitutes the cavity limiting surface portion. The base portion and the projecting portions are transparent and are preferably made of the same material or of materials having identical refractive indices.

The two projecting portions extend from a side of the base portion opposite the cavity limiting surface portion, and thus opposite the cavity, and are spaced from each other such that they are separated by a surface portion of the base portion. Each of the projecting portions has a first face, or exterior surface portion. It is preferred if the first faces are arranged such that the first face of one of the projecting portions faces away from the first face of the other of the projecting portions. In this regard it is noted that in the usual manner this does not mean that they face in exactly opposite directions, but that they are arranged on sides of the projections portions facing away from each other. It is also preferred if the two projecting portions are of identical shape and dimensions.

The apparatus further comprises one or more illuminating devices and one or more image recording devices. Each of these illuminating devices and each of these image recording devices is positioned or can be positioned - and the two projecting portions are arranged - such that for each image recording device and an associated one of the at least one illuminating device there exists, for light emitted in operation by the respective illuminating device, at least one beam path along which the light enters the transparent element through the first face of the one projecting portion, is reflected on the cavity limiting surface portion, exits the transparent element through the first face of the other projecting portion and is detected by the respective image recording device. The light stays inside the transparent element along the entire portion of the beam path between the first face of the one projecting portion and the first face of the other projecting portion.

In this regard, it is particularly preferred if, between the first face of the one projecting portion and the first face of the other projecting portion, the at least one beam path extends entirely inside solid transparent material of the transparent element, including the base portion, the projecting portions and possible transparent adhesive material between the base portion and the projecting portions. It is even more preferred if the transparent element is entirely made of or consists of solid transparent material. It should be noted that adhesive material disposed between, e.g., the base portion and the projecting portions may constitute a portion of such solid transparent material.

It is also particularly preferred in this regard if the arrangement is such that light travelling along the at least one beam path enters the one projecting portion perpendicularly to the first face thereof and/or exits the other projecting portion perpendicularly to the first face thereof. Alternatively or additionally it is particularly preferred if the light extends in straight lines between the first face of the one projecting portion and the cavity limiting surface portion and between the cavity limiting surface portion and the first face of the other projecting portion. In case of the projecting portions and the base portions being separate elements this requires that they are attached to each other by suitable means, such as transparent adhesive material, matching their refractive indices. Such arrangements avoid additional effects due to refraction and negatively affecting the quality of images recorded by the one or more image recording devices. In other words, it is preferred if the two projecting portions are arranged such that for each of the two projecting portions a straight line can be drawn extending from a common point on the cavity limiting surface portion, through the base portion towards the respective projecting portion, from the base portion into the respective projecting portion and, preferably perpendicularly, through the first face of the respective projecting portion, wherein between the common point and the respective first face each of these straight lines extends completely inside solid transparent material of the transparent element, including the base portion, the projecting portions and possible transparent adhesive material between the base portion and the projecting portions.

In any case, it is particularly preferred if the at least one beam path is such that the angle of incidence of the light travelling in operation along the at least one beam path onto the cavity limiting surface portion with respect to the normal of the cavity limiting surface portion at the point of reflection exceeds the critical angle for total reflection with respect to a predetermined gas, in particular air, being present at the interface constituted by the cavity limiting surface portion. As already explained in detail above, this provides the advantage that due to the different refractive indices of the predetermined gas and the bubble lamellae of a foam sample present inside the cavity and adjoining the cavity limiting surface portion, partial transmission of light occurs at the locations of the bubble lamellae and total reflection only occurs outside these locations. This provides for the possibility to obtain very sharp and well-defined images of the bubble lamellae.

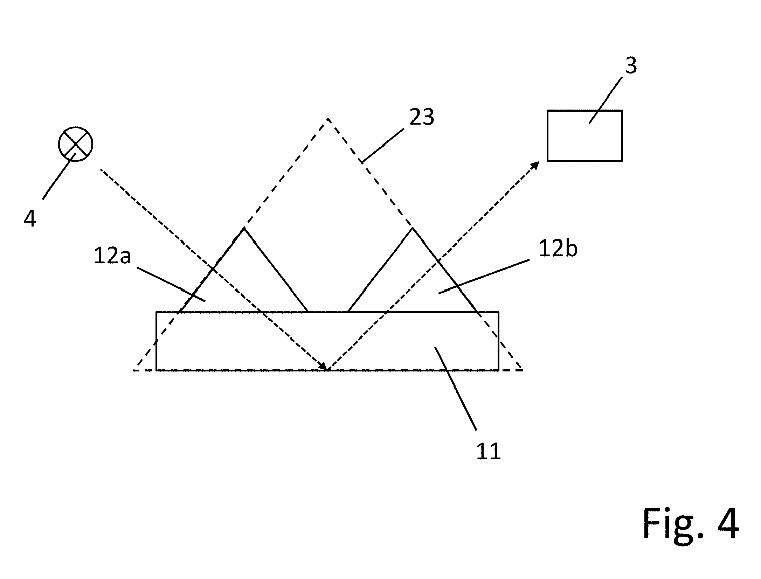

In any case, the apparatus of the above-described construction provides the advantage that the transparent element is considerably smaller and, therefore, simpler and more cost-efficient to produce than a single large prism according to the requirements outlined above when discussing modification of the prior art apparatus to high pressure applications. Nevertheless the transparent element provides the same optical function as a single large prism, because the first faces of the projecting portions provide faces of sufficient dimension corresponding to portions of faces of a single large prism, and because the smaller projecting portions are extended by the base portion, which can be constructed of sufficient thickness to withstand the desired high pressures. It should be noted that - as will be explained further below in more detail with reference to Figure 4 - the present invention even provides an advantage as compared to a possible arrangement in which a single prism is disposed on a transparent plate of sufficient thickness to withstand the pressure inside the cavity. In that case the single prism would still have to be increased in size considerably as compared to the known low pressure prism arrangements without a separate thick transparent plate, because the beam reflected at the cavity limiting surface portion (provided in that case by the transparent plate) would have to transverse the thickness of the transparent plate, so that the portions of the prism faces into which the light enters and from which the light exits would have to be at a greater distance from each other than without the thick plate.

In a preferred embodiment, each of the two projecting portions is a triangular prism portion, for example a right triangular prism portion. The prism portions may be constituted by separate elements suitably attached or secured to the base portion, or they may be formed integrally in one piece with the base portion. In the former case, as any triangular prism each prism portion has three prism faces, i.e. the three surfaces of the prism portion which are at an angle with respect to each other and define a triangular cross section of the prism portion, and each prism portion is secured to the base portion with one of the prism faces, and in the latter case each prism portion only has two actual physical prism faces, because the third prism face is constituted by the (imaginary) interface between the prism portion and the base portion. In any case, for each of the prism portions the first face is constituted by one prism face of the prism portion and a second face is constituted by another prism face of the prism portion, wherein the two prism portions are arranged such that the first faces are facing away from each other and the second faces face towards each other.

In embodiments utilizing prism portions it is further preferred if the directions of extension of the two prism portions defined as the directions perpendicular to the triangular cross-section or the direction of the edge at which the first and second faces meet. In this regard, it is particularly preferred if the first face of one of the prism portions extends parallel to the second face of the other prism portion and the first face of the other prism portion extends parallel to the second face of the one prism portion. In any case, it is particularly preferred if the two prism portions are of identical shape and dimensions.

In a preferred embodiment the base portion is plate-shaped. It may be provided in the form of a curved plate, but it is preferred for the base portion to be provided in the form of a straight or planar plate having opposite surfaces extending parallel to each other, wherein one of these surfaces provides the cavity limiting surface portion and on the other of these surfaces or on the side of the other of these surfaces the two projecting portions are located. For example, the base portion may preferably be a rectangular cuboid. Further, irrespective of the base portion being plate-shaped or not, while it is in principle possible that the cavity limiting surface portion is curved, it is particularly preferred if the cavity limiting surface portion is planar or at least comprises a planar portion. A planar construction of the cavity limiting surface portion or of at least a portion thereof simplifies the arrangement and the evaluation of the recorded images.

The transparent element may be integrally made in one piece and then preferably consists of the base element and the projecting portions. However it is preferred that the base portion and the two projecting portions are separate elements secured or attached to each other. As already indicated above, in the case of the projecting portions being prism portions they would be attached to the base portion such that a third face of each prism portion is secured to a surface of the base portion opposite the cavity limiting surface portion. In this regard, the third faces or such prism portions or - in the general case - faces of the projecting portions attached to the base portion preferably extend parallel to the surface of the base portion opposite the cavity limiting surface portion. The projecting portions may be advantageously secured to the base portion by means of a transparent adhesive material having optical properties matching those of the base portion and the projecting portions, which are preferably made of the same material. In particular, the refractive indices of the adhesive material and the base and projecting portions are identical or essentially identical. The transparent element then preferably consists of the base element, the projecting portions and the transparent adhesive material or other interface material disposed between the base portion and the projecting portions.

In this regard, it is also possible that the two projecting portions are part of a single integral element of transparent material which is secured or attached to a separate element constituting the base portion or a part of the base portion. In that case, the single integral element including the two projecting portions includes an integral connecting portion interconnecting the two projecting portions. Apart from the fact that the two projecting portions are provided by a single integral element, the same considerations apply outlined above for the attachment of projecting portions constituted by separate elements. It is also possible that the base portion includes two or more separate elements attached or secured to each other in the manner described above, wherein one of these elements may be integrally formed in one piece with one or both of the projecting portions. In that case a portion of the latter element interconnecting the two projecting portions may in fact constitute part of the base portion.

In any case, although in a preferred embodiment the base portion is plate-shaped having a constant thickness, it is to be noted that the base portion does not have to be plate-shaped or may also be plate-shaped with varying thickness. Thus, it is possible that the base portion has a greater thickness at least in part of or the entire region between the two projecting portions than in other regions, such as the regions outside the region between the two projecting portions. This applies both to embodiments in which the transparent element is integrally made in one piece and to embodiments in which the transparent element is made of several separate elements attached or secured to each other.

In a preferred embodiment the cavity is elongate and further preferably extends along a straight longitudinal axis. In particular, the cavity may preferably be cylindrical, which provides an advantageous geometry for high pressure applications. In case of an elongate cavity having a straight longitudinal axis it is also preferred if the through-hole is likewise elongate, e.g. slit- or slot-shaped, and extends parallel to the longitudinal axis of the cavity. Due to its extension along a considerable portion of the height of the cavity, such an elongate through-hole may be utilized for foam level measurements. Nevertheless, due to the limited dimensions perpendicularly to the height direction, the overall dimensions of the through-hole are limited, which is important due to the high pressures prevailing in use in the cavity.

In a preferred embodiment the housing comprises steel. This preferably includes at least the wall portion and more preferably all parts of the housing with the exception of the transparent element and possible sealing elements, which - in all embodiments - may be provided between the transparent element and the remainder of the housing.

It is preferred if the housing is adapted to withstand pressures of at least 10 bar, more preferably at least 30 bar and even more preferably at least 300 bar inside the cavity with respect to the exterior of the housing. Further, it is preferred if the housing is adapted to withstand pressures of up to 700 bar or more.

In a preferred embodiment the housing further comprises a support element which is fixedly or preferably removably secured to the remainder of the housing and which supports the transparent element, e.g. by means of bolts. In this regard, the support element comprises an abutment portion abutting the base portion between the two spaced projecting portions. In this region the stress on the base portion and on the entire transparent element is generally maximum, and it is available for additional support due to the fact that light travelling through the transparent element between the illuminating devices and the image recording devices does not need to cross this region, but enters and exits through the first faces of the projecting portions, which - depending on the thickness of the base portion and the dimensions of the projecting portions - for example advantageously may be located in the region of the edges of the through-hole. The support element may consist of several components, which are secured to each other, but it is preferred if the support element is integrally made in one piece. Further, it is possible if the abutment portion is constructed such that it fills a part of or the entire region between the two spaced prism portions.

In embodiments including the support element it is further preferred if on the side on which the projecting portions are located the base portion comprises a continuous circumferentially extending edge region surrounding both projecting portions. The support element further comprises a closed outer frame portion, inside which the abutment portion extends and which preferably is planar, which is fixedly or preferably removably secured, e.g. by means of bolts, to a portion of the housing other than the transparent element and the support element, in particular to a steel main portion of the housing. The outer frame portion comprises a continuous circumferentially extending engagement portion engaging the edge region of the base portion. The engagement portion may comprise a recess or step in which the edge region can be received. Such a frame portion advantageously serves to reliably secure the base portion and the entire transparent element to the remainder of the housing. For the same reason and in order to protect the transparent element it is particularly preferred if the frame portion and the abutment portion are constructed such that they completely cover the transparent element with the exception of two openings permitting entry and exit of light through the first faces of the prism portions.

It is to be noted that such a frame portion may also be provided as a separate element for the same purpose if no support element is used.

In any case, it is preferred if the support element - or a separate frame element - is made of steel.

In embodiments in which the support element is used it is particularly preferred if the abutment portion also abuts at least one other face of the projecting portions, such as - in the embodiments utilizing prism portions described above - the second faces of both prism portions, preferably in their entirety. More preferably, the abutment portions covers and abuts the entire region of the base portion between the two projecting portions.

In a preferred embodiment only one image recording device is used, which may be stationary or movable. In alternative embodiments multiple stationary or movable image recording devices are present.

In a preferred embodiment there are multiple stationary or movable image recording devices which are positioned or can be positioned along a direction of extension of the through-hole, such that, in operation, light emitted by the at least one illuminating device can be recorded at different heights of the cavity enabling foam level measurements as well as foam structure measurements at different heights. In this embodiment it is particularly preferred if the apparatus further comprises a control device connected to the image recording devices and adapted to receive images recorded by the image recording devices and to - preferably automatically - combine or stitch together the images to form a single image. Such single image may then be analyzed, e.g. automatically by or with the help of the control device.

In the following an exemplary embodiment of the foam analysis apparatus will be explained in more detail with reference to the drawings.
Figure 1 shows a schematic sectional top view of the apparatus according to an embodiment of the present invention.
Figure 2 shows a front view of the apparatus of Figure 1 without light source and camera.
Figure 3 shows a schematic perspective view of the apparatus of Figure 1 without light source and camera and with a portion of a support cover being cut away for the purpose of illustration.
Figure 4 illustrates a transparent element of the apparatus of Figures 1 to 3 in comparison to a single large prism.

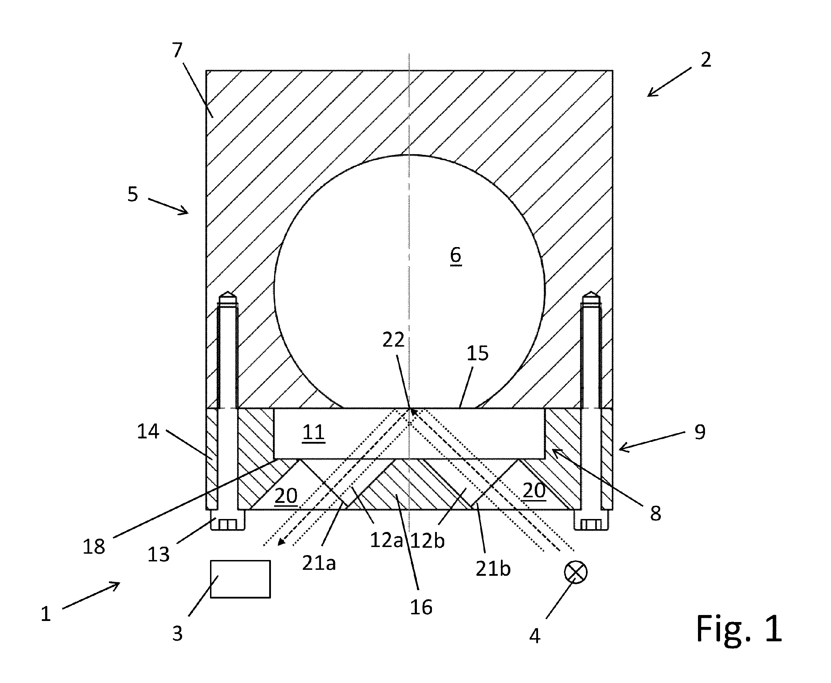

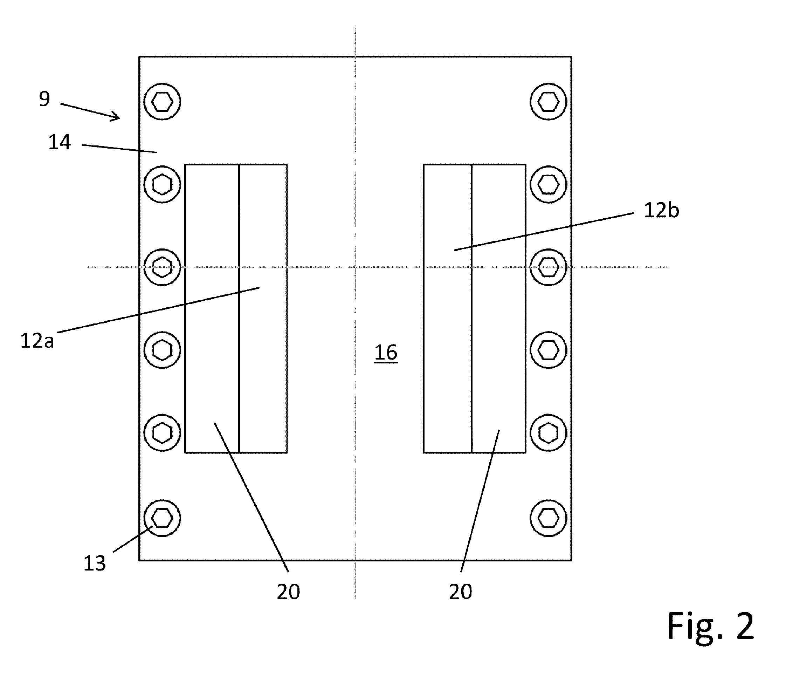

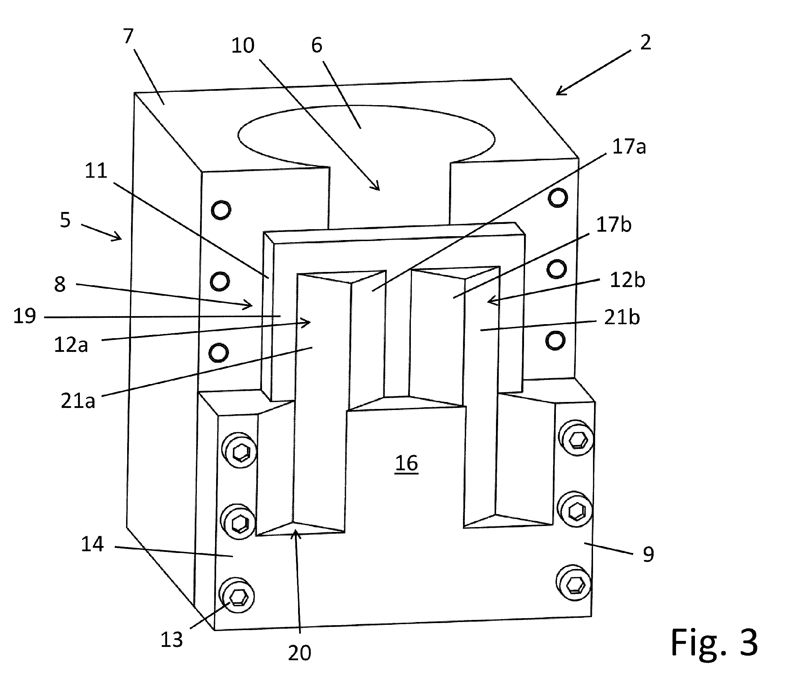

The foam analysis apparatus 1 shown in Figures 1 to 3 comprises a pressure chamber 2, an image recording device in the form of a camera 3 and an illuminating device in the form of a light source 4.

The pressure chamber 2 comprises a housing 5 inside of which a closed cylindrical interior cavity 6 is defined, which is limited by interior surfaces of the housing 5. The cavity 6 is adapted to receive a foam sample under pressures of e.g. 300 to 700 bar during use of the apparatus 1. The housing 5 comprises a main part 7 made of steel, which provides nearly all interior wall portions and respective interior surfaces limiting the cavity 6, an upper cover element (not shown), a transparent element 8 made of glass and a support element 9 integrally made in one piece of steel.

The transparent element 8 includes a plate-shaped base portion 11 and two projecting portions in the form of two elongate right triangular prism portions 12a, 12b secured to one of the extended surfaces of the base portion 11 such that they are spaced from each other and extend side-by-side and parallel with respect to each other. With the opposite extended surface of the base portion 11 bearing against the main part 7 of the housing 5 the transparent element 8 is mechanically secured to the main part 7 by means of the support element 9 and a series of bolts 13. The bolts 13 extend through an outer frame portion 14 of the support element 9, which bears against the main part 7 of the housing 5, and into the main part 7. The base portion 11 closes an elongate slot 10 provided in the main part 7 of the housing 5 and extending along the longitudinal axis of the cylindrical cavity 6, i.e. along the height thereof. Thus, it provides a portion 15 of the interior surfaces of the housing 5 limiting the cavity 6, i.e. this portion 15 is a cavity limiting surface portion.

Inside the outer frame portion 14 the support element 9 comprises a support portion 16 in the form of a straight support web extending between opposite portions of the outer frame portion 14. The support portion 16 is shaped and dimensioned to completely fill the space between the two prism portions 12a, 12b and to bear against the portion of the surface of the base portion 11 between the two prism portions 12a, 12b and against the two facing faces 17a, 17b of the prism portions 12a, 12b. Thus, the support portion 16 supports the base portion 11 along the center of the slot 10, i.e. in the region in which the forces on the base portion 11 caused by the pressure inside the cavity 6 are maximum.

The outer frame portion 14 of the support element 9 is rectangular and annularly closed and, in the surface facing the cavity 6, comprises a circumferentially extending step 18 providing a circumferential recessed region which is shaped and dimensioned to accommodate the base portion 11 of the transparent element 8 (see, in particular, Figure 1). The outer frame portion 14 engages the base portion 11 along an outer engagement region 19 extending in an annularly closed manner along the edge of the base portion 11 and around both prism portions 12a, 12b.

As can be seen in Figures 1 to 3 the support element 9 covers the entire transparent element 8 with the exception of two elongate regions corresponding to the two faces 21a, 21b of the prism portions 12a, 12b facing away from each other. In effect, the support element 9 therefore constitutes a plate in which a recess corresponding to the shape of the transparent element 8 and two elongate openings 20 are provided.

As can be seen in Figure 1, the two prism portions 12a, 12b are arranged and configured such that for each of them a straight line can be drawn from a common point 22 on the cavity limiting surface portion 15 through the base portion 11 into the respective prism portion 12a, 12b and perpendicularly through the face 21a, 21b thereof out of the respective prism portion 12a, 12b. These straight lines, which are indicated as dashed arrows, constitute a beam path for light emitted in operation by the light source 4 and reaching the camera 3 after total reflection at the cavity limiting surface portion 15. Thus, the light source 4 and the camera 3 are arranged such that light emitted by the light source 4 enters the transparent element 8 through the face 21b of the prism portion 12b, is reflected on the cavity limiting surface portion 15 and exits the transparent element 8 through the face 21a of the prism portion 12a. Due to the arrangement of the prism portions 12a, 12b and the base portion 11 a straight beam path is provided between the light source 4 and the cavity limiting surface portion 15 and between the cavity limiting surface portion 15 and the camera 3, and no light useful for image recording leaves the transparent element 8 in regions other than the faces 21a, 21b. This enables the advantageous additional support of the transparent element 8 by the support portion 16 of the support element 9, which additional support is essential for the pressure chamber to be able to withstand very high pressures. Further such beam paths are indicated in Figure 1 by dotted lines.

It is important to note that, as already explained in detail above, taking into consideration the refractive indices of bubble lamellae of a foam sample received in the cavity 6 and of the gas atmosphere surrounding the foam sample in the cavity 6, the arrangement and the beam path are chosen such that at locations of the cavity limiting surface portion 15 not adjoined by bubble lamellae total reflection occurs, but that at locations of the cavity limiting surface portion 15 adjoined by bubble lamellae the indicated total reflection does not occur and partial transmission of light into the cavity 6 takes place.

As illustrated in Figure 4 in combination with Figure 1, in its optical function the transparent element 8 corresponds to a larger single prism (illustrated as a dashed line 23 in Figure 4), but includes considerably less material and is easier to secure to the main part 7 of the housing 5. It can also be taken from Figure 4 that the present invention even provides the mentioned advantages as compared to a possible arrangement of a single prism portion extending from the base portion 11, because due to the fact that the light must traverse the thickness of the base portion 11 there is a minimum distance between the possible light entry and exit points into and from the transparent element, which is considerably larger than for prior art arrangements using only a single prism as transparent element. Thus, a single prism attached to a thick base portion 11 would have to have large dimensions which can be taken from the corresponding portion of the dashed line in Figure 4 and would be very expensive.

## Claims

1. A foam analysis apparatus including
- a pressure chamber (2) comprising a housing (5) having
- an interior cavity (6) for holding a foam sample under pressure,
- a wall portion with a through-hole (10) extending between the cavity (6) and the exterior of the housing (5), and
- a transparent element (8) closing the through-hole (10) such that a cavity limiting surface portion (15) of the surface of the transparent element (8) forms a portion of a surface of an interior wall limiting the cavity (6),
- wherein the transparent element (8) comprises a base portion (11) and two spaced projecting portions (12a, 12b), wherein the base portion (11) is located between the cavity (6) and the projecting portions (12a, 12b) and defines the cavity limiting surface portion (15), and
- wherein the two projecting portions (12a, 12b) extend from a side of the base portion (11) opposite the cavity limiting surface portion (15) and are spaced from each other such that they are separated by a surface portion of the base portion (11), and wherein each of the projecting portions (12a, 12b) has a first face (21a, 21b),
- at least one illuminating device (4), and
- at least one image recording device (3),
wherein the two projecting portions (12a, 12b) are arranged and the at least one illuminating device (4) and the at least one image recording device (3) are positioned or can be positioned such that for each image recording device (3) and an associated one of the at least one illuminating device (4) there exists, for light emitted in operation by the respective illuminating device (4), at least one beam path along which the light enters the transparent element (8) through the first face (21a) of one (12a) of the two projecting portions (12a, 12b), is reflected on the cavity limiting surface portion (15), exits the transparent element (8) through the first face (21b) of the other projecting portion (12b) and is detected by the respective image recording device (3), wherein the light stays inside the transparent element (8) along the entire portion of the beam path between the first face (21a) of the one projecting portion (12a) and the first face (21b) of the other projecting portion (12b).

2. The foam analysis apparatus according to claim 1, wherein each of the two projecting portions (12a, 12b) is a triangular prism portion (12a, 12b), wherein the first face (21a, 21b) of the prism portion (12a, 12b) is constituted by one prism face of the prism portion (12a, 12b) and a second face (17a, 17b) is constituted by another prism face of the prism portion (12a, 12b), wherein the two prism portions (12a, 12b) are arranged such that the first faces (21a, 21b) are facing away from each other and the second faces (17a, 17b) face towards each other.

3. The foam analysis apparatus according to claim 1 or claim 2, wherein the at least one beam path is perpendicular to the first face (21a) of the one projecting portion (12a) and/or perpendicular to the first face (21b) of the other projecting portion (12b).

4. The foam analysis apparatus according to any of the preceding claims, wherein the base portion (11) is provided in the form of a straight or curved plate.

5. The foam analysis apparatus according to any of the preceding claims, wherein the transparent element (8) is integrally made in one piece.

6. The foam analysis apparatus according to any of claims 1 to 4, wherein the base portion (11) and the two projecting portions (12a, 12b) are separate elements secured to each other such that a third face of each of the projecting portions (12a, 12b) is secured to a surface of the base portion (11) opposite the cavity limiting surface portion (15).

7. The foam analysis apparatus according to any of the preceding claims, wherein the cavity (6) is elongate and extends along a straight longitudinal axis, wherein preferably the through-hole (10) is elongate and extends parallel to the longitudinal axis of the cavity (6).

8. The foam analysis apparatus according to any of the preceding claims, wherein the housing (5) comprises steel, including the wall portion.

9. The foam analysis apparatus according to any of the preceding claims, wherein the housing (5) is adapted to withstand pressures of at least 10 bar and/or up to 700 bar inside the cavity (6) with respect to the exterior of the housing (5).

10. The foam analysis apparatus according to any of the preceding claims, wherein the housing (5) further comprises a support element (9) secured to the remainder of the housing (5) and supporting the transparent element (8), wherein the support element (9) comprises an abutment portion (16) abutting the base portion (11) between the two projecting portions (12a, 12b).

11. The foam analysis apparatus according to claim 10, wherein on the side on which the projecting portions (12a, 12b) are located the base portion (11) comprises a continuous circumferentially extending edge region (19) surrounding both projecting portions (12a, 12b), and
the support element (9) comprises a closed outer frame portion (14) which is secured to a portion of the housing (5) other than the transparent element (8) and the support element (9), and which comprises a continuous circumferentially extending engagement portion (18) engaging the edge region (19).

12. The foam analysis apparatus according to claim 10 or claim 11, wherein the support element (9) is made of steel.

13. The foam analysis apparatus according to any of the preceding claims, wherein the at least one image recording device (3) is a single stationary or movable image recording device (3) or multiple stationary or movable image recording devices (3).

14. The foam analysis apparatus according to any of claims 1 to 13, wherein the at least one image recording device (3) is multiple stationary or movable image recording devices (3) which are positioned or can be positioned along a direction of extension of the through-hole (10), such that, in operation, light emitted by the at least one illuminating device (4) can be recorded at different heights of the cavity (6) enabling foam level measurements and foam structure analysis at different heights.

15. The foam analysis apparatus according to claim 14, further comprising a control device connected to the image recording devices (3) and adapted to receive images recorded by the image recording devices (3) and to combine the images to form a single image.
